# EUROPÄISCHE PATENTSCHRIFT

(11) **EP 3 206 910 B1**
(45) Veröffentlichungstag und Bekanntmachung des Hinweises auf die Patenterteilung: **25.03.2020**
(21) Anmeldenummer: 15775464.9
(22) Anmeldetag: 09.10.2015
(51) Int. Cl.: B60N 2/58, B44C 1/24

(54) **POLSTERBEZUG, INSBESONDERE FÜR EINEN FAHRZEUGSITZ, UND VERFAHREN ZUR HERSTELLUNG EINES POLSTERBEZUGS**
UPHOLSTERY COVER, IN PARTICULAR FOR A VEHICLE SEAT, AND METHOD FOR PRODUCING AN UPHOLSTERY COVER
TISSU D'HABILLAGE , EN PARTICULIER POUR UN SIEGE DE VEHICULE, ET PROCÉDÉ DE FABRICATION D'UN TISSU D'HABILLAGE

(30) Priorität: 17.10.2014 DE 102014221125; 21.05.2015 DE 102015209332
(43) Veröffentlichungstag der Anmeldung: 23.08.2017
(73) Patentinhaber: Adient Luxembourg Holding S.à r.l., 1855 Luxembourg (LU)
(72) Erfinder: DRBOHLAV, Tomás, 460 01 Liberec (CZ); NOSKOVA, Tereza, 326 00 Plzen (CZ)
(74) Vertreter: Liedhegener, Ralf
(86) Internationale Anmeldenummer: PCT/EP2015/073373
(87) Internationale Veröffentlichungsnummer: WO 2016/058921

(56) Entgegenhaltungen:
- AT-U1- 1 532
- DE-A1-102006 021 919
- US-A1- 2014 239 697

## Beschreibung

Die Erfindung betrifft einen Polsterbezug für einen Fahrzeugsitz, mit einer Oberflächenschicht und wenigstens einer Prägung in der Oberflächenschicht, sowie ein Verfahren zur Herstellung eines Polsterbezugs für einen Fahrzeugsitz mit einer Oberflächenschicht und wenigstens einer Prägung.

### Stand der Technik

Aus der DE 10 2006 021 919 A1 ist ein Verfahren zur Ausbildung einer dreidimensionalen Prägung in einem Polsterbezug für einen Fahrzeugsitz bekannt. Die als Marke bezeichnete Prägung wird in eine Oberflächenschicht aus Leder eingebracht. Die Form der Prägung wird anschließend fixiert, indem die Rückseite der Oberflächenschicht mit einem Sperrfutter versehen und mit einem Lack behandelt wird.

Die AT 001 532 U1 offenbart einen Sportschuh, insbesondere Fußballschuh, wobei der Schuhoberteil im Blattbereich an seiner Narbenseite Erhebungen aufweist und an seiner Innenseite entsprechende Vertiefungen aufweist, die mit einer Einlage aus elastischem Material ausgefüllt sind, das mit dem Material des Schuhoberteiles flächig verbunden ist. An der Innenseite ist ein reißfestes und dehnungsarmes Futter aus textilem Material befestigt, das die Einlagen abdeckt. Mit einem solchen Sportschuh ist die Aufgabe gelöst, einen Sportschuh, insbesondere einen Fußballschuh, zu schaffen, bei welchem das Oberleder im Bereich des Blattes Erhebungen, insbesondere auch zur Verbesserung der Ballführung, aufweist, fest und widerstandsfähig ist und daher einen Schutz gegen eine Belastung durch Stollen anderer Sportler gibt.

Aus der DE 10 2006 021 919 A1 ist ein Verfahren zur Ausbildung einer geprägten Marke an einem Bezug eines Fahrzeugsitzes bekannt, wobei gemäß dem Verfahren die Marke in den Bezug eingeprägt und dann die dreidimensionale Form der Marke fixiert wird, wobei zum Fixieren der dreidimensionalen Form der Marke die linke Seite des Bezugs im Bereich der Marke mit einem Lack behandelt wird.

### Aufgabe

Der Erfindung liegt die Aufgabe zu Grunde, einen Polsterbezug für einen Fahrzeugsitz und ein Verfahren zur Herstellung eines Polsterbezugs für einen Fahrzeugsitz der eingangs genannten Art zu verbessern, insbesondere einen Polsterbezug mit einem lokal ausgebildeten, dekorativen dreidimensionalen Design zur Verfügung zu stellen. Insbesondere sollen konkave und konvexe Formen erzeugt werden können. Insbesondere soll ein Polsterbezug mit lokal ausgebildeten konkaven und konvexen Formen zur Verfügung gestellt werden. Insbesondere soll die Prägung stabilisiert sein. Insbesondere soll die Prägung atmungsaktiv gestaltet sein. Insbesondere soll die Prägung eine weiche Haptik aufweisen.

### Lösung

Diese Aufgabe wird erfindungsgemäß gelöst durch einen Polsterbezug für einen Fahrzeugsitz, mit einer Oberflächenschicht und wenigstens einer Prägung in der Oberflächenschicht, wobei ein Hohlraum auf der Rückseite der wenigstens einen Prägung vollständig mit einer Einlage gefüllt ist.

Dadurch, dass ein Hohlraum auf der Rückseite der Prägung vollständig mit einer Einlage gefüllt ist, ist die Prägung stabilisiert. Unter der Rückseite der Prägung ist die von einer sichtbaren Oberfläche der Oberflächenschicht abgewandte Seite der Prägung zu verstehen. Der Hohlraum ist insbesondere der Raum, der sich im Bereich der Prägung zwischen einer geprägten Rückseite der Oberflächenschicht und einer durch den nicht geprägten Nachbarbereich der Oberflächenschicht definierten Fläche befindet. Der Hohlraum kann bei einer mit einer Trägerschicht versehenen Oberflächenschicht der Raum im Bereich der Prägung zwischen einer geprägten Rückseite der Trägerschicht und einer durch den nicht geprägten Nachbarbereich der Trägerschicht definierten Fläche sein.

Die Oberflächenschicht kann ein Leder sein. Die Oberflächenschicht kann ein Stoff sein. Die Oberflächenschicht kann ein Gewebe sein. Die Oberflächenschicht kann ein Gewirke sein. Die Oberflächenschicht kann ein Textil sein. Die Oberflächenschicht kann jedes an sich bekannte und verformbare Material sein, das sich als sichtbares Oberflächenmaterial eines Polsters eignet.

Unterhalb der Oberflächenschicht kann eine Trägerschicht angeordnet sein. Unterhalb bedeutet in diesem Zusammenhang, dass die Trägerschicht auf der von einer sichtbareren Oberfläche des Polsterbezugs abgewandten Seite der Oberflächenschicht angeordnet ist. Die Trägerschicht kann die Oberflächenschicht zusätzlich stabilisieren und/oder abdichten.

Die Prägung kann ausschließlich in der Oberflächenschicht ausgebildet sein. Die Einlage ist dann unmittelbar mit der Rückseite der Oberflächenschicht in Kontakt. Rückseite bedeutet in diesem Zusammenhang eine von einer sichtbareren Oberfläche des Polsterbezugs abgewandte Seite der Oberflächenschicht. Der durch die Prägung gebildete Hohlraum umfasst ein Volumen, das sich aus einem Vergleich der geprägten Oberflächenschicht mit der zuvor nicht geprägten Oberflächenschicht im Bereich der Prägung ergibt. Der Hohlraum ist vollständig mit einer Einlage gefüllt. Dies stabilisiert das Oberflächenmaterial bestmöglich.

Die Prägung kann in der Oberflächenschicht und in einer, insbesondere flächig mit der Oberflächenschicht verbundenen, Trägerschicht ausgebildet sein. Die Einlage kann zwischen der Oberflächenschicht und der Trägerschicht angeordnet sein.

Alternativ kann die Einlage ausschließlich an die Trägerschicht angrenzen, insbesondere auf einer von der Oberflächenschicht abgewandten Seite der Trägerschicht. Der durch die Prägung gebildete Hohlraum umfasst dann ein Volumen, das sich aus einem Vergleich der geprägten Trägerschicht mit der zuvor nicht geprägten Trägerschicht im Bereich der Prägung ergibt. Der Hohlraum ist vollständig mit einer Einlage ausgefüllt.

Die Trägerschicht kann ein Vlies sein. Die Trägerschicht kann grundsätzlich aus jedem aus dem Stand der Technik bekannten Trägermaterial für Polsterbezüge bestehen.

Der Polsterbezug kann mehrere Prägungen und somit mehrere Hohlräume aufweisen. Jeder dieser Hohlräume kann mit jeweils einer Einlage gefüllt sein. Dabei können die Einlagen unabhängig voneinander ausgebildet sein. Mehrere Einlagen können miteinander verbunden sein. Mehrere Einlagen können einteilig miteinander verbunden sein. Das Material der Einlagen kann in einer von der Oberflächenschicht abgewandten Richtung aus den Prägungen überstehen. Eine Lage aus Einlagenmaterial kann eine flächige Grundform mit ausgeformten Einlagen haben.

Die wenigstens eine Einlage kann ein Schaummaterial sein. Die wenigstens eine Einlage kann in den Hohlraum eingeschäumt sein. Die wenigstens eine Einlage kann ein PU-Schaummaterial sein. Die wenigstens eine Einlage kann ein organisches Material sein. Die wenigstens eine Einlage kann tierische Fasern aufweisen, beispielsweise Rosshaar. Die wenigstens eine Einlage kann pflanzliche Fasern aufweisen, beispielsweise Kokoshaar. Die wenigstens eine Einlage kann synthetische Fasern aufweisen.

Auf der von dem Oberflächenmaterial abgewandten Seite der Einlage kann der Polsterbezug eine Schaumlage aufweisen, die den Polsterbezug weicher gestaltet. Die Schaumlage kann mit einer zusätzlichen Gewebeschicht versehen sein, beispielsweise aus einem Baumwollgewebe. Die Gewebeschicht kann die unterste Lage des Polsterbezugs sein, das heißt die von einer sichtbareren Oberfläche des Polsterbezugs abgewandte Rückseite des Polsterbezugs bilden. Die Gewebeschicht kann auch unmittelbar an der Oberflächenschicht und/oder der Trägerschicht oder/oder den Einlagen anliegen, das heißt ohne Zwischenlage einer Schaumlage.

Einzelne Lagen des Polsterbezugs können mittels eines Hochfrequenz-Schweißverfahrens miteinander verbunden sein.

Der Polsterbezug weist vorzugsweise nur abschnittsweise eine Prägung oder mehrere Prägungen auf. Vorzugsweise ist eine Fläche der Oberflächenschicht mit einem Flächenanteil von wenigstens 50 %, höchst vorzugsweise wenigstens 80% der Oberflächenschicht ohne Prägung. Vorzugsweise ist eine zusammenhängende Fläche der Oberflächenschicht mit einem Flächenanteil von wenigstens 50 %, höchst vorzugsweise wenigstens 80% der Oberflächenschicht ohne Prägung. Somit sind vorzugsweise höchstens 50 %, höchst vorzugsweise höchstens 20 % der Oberflächenschicht geprägt. Besonders bevorzugt weist die Oberflächenschicht nur lokal eine oder mehrere Prägungen auf. Der Polsterbezug kann aufgrund der Prägung unsymmetrisch zu einer Mittelebene des Fahrzeugsitzes sein.

Die Aufgabe wird zudem gelöst durch ein Verfahren zur Herstellung eines Polsterbezugs für einen Fahrzeugsitz, mit einer Oberflächenschicht und wenigstens einer Prägung, wobei die Oberflächenschicht in einem Werkzeug mit der wenigstens einen Prägung versehen wird, und eine Rückseite der Prägung in einem weiteren Verfahrensschritt vollständig mit einer Einlage gefüllt wird.

Die Oberflächenschicht ist vorzugsweise mit einer Trägerschicht verbunden, wobei die Oberflächenschicht und die Trägerschicht in dem Werkzeug mit der wenigstens einen Prägung versehen werden.

Die Prägung kann bei Raumtemperatur in die Oberflächenschicht und/oder die Trägerschicht eingebracht werden. Alternativ kann die Prägung auch bei einer gegenüber der Raumtemperatur erhöhten Temperatur in die Oberflächenschicht und/oder die Trägerschicht eingebracht werden. Ein unter Wärme aushärtender Klebstoff kann einzelne Schichten oder Lagen des Polsterbezugs miteinander verbinden.

In einem möglichen weiteren Verfahrensschritt kann eine Schaumlage auf die von der Oberflächenschicht abgewandte Seite des Polsterbezugs aufgebracht werden. Dadurch lassen sich der Komfort und die Haptik des Polsterbezugs zusätzlich erhöhen.

In einem möglichen weiteren Verfahrensschritt kann eine Gewebeschicht auf die von der Oberflächenschicht abgewandte Seite des Polsterbezugs aufgebracht werden. Die Gewebeschicht erhöht den Verschleißwiderstand des Polsterbezugs.

Das erfindungsgemäße Verfahren zur Herstellung eines Polsterbezugs kann mittels eines Werkzeugs zur Herstellung des Polsterbezugs ausgeführt werden. Ein Werkzeug zur Herstellung des Polsterbezugs ist vorzugsweise ein Prägewerkzeug. Ein Werkzeug zur Herstellung des Polsterbezugs weist vorzugsweise eine Patrize mit Erhebungen und eine Matrize mit Vertiefungen auf. Das Werkzeug kann aus Holz bestehen, insbesondere zur Herstellung von Prototypen-Polsterbezügen. Das Werkzeug kann aus Aluminium bestehen, insbesondere für eine Serienproduktion von Polsterbezügen.

Durch den erfindungsgemäßen Polsterbezug und das erfindungsgemäße Verfahren zur Herstellung eines Polsterbezugs ist ein Polsterbezug mit einem dekorativen dreidimensionalen Design zur Verfügung gestellt. Konkave und konvexe Formen können in dem Polsterbezug erzeugt werden. Prägungen in dem Polsterbezug können nachhaltig stabilisiert werden. Insbesondere ist die Prägung atmungsaktiv und weist eine weiche Haptik auf.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine Matrize und eine Patrize eines Werkzeugs zur Herstellung eines Polsterbezugs gemäß eines ersten Ausführungsbeispiels, sowie eine zwischen der Matrize und der Patrize angeordnete, mit einer Trägerschicht versehene Oberflächenschicht vor einem Prägenschritt,
- Fig. 2a:: die Matrize und die Patrize aus Fig. 1 sowie die zwischen der Matrize und der Patrize angeordnete Oberflächenschicht mit Trägerschicht nach dem Prägenschritt,
- Fig. 2b:: einen Schnitt durch die Einzelheit II aus Fig. 2a,
- Fig. 3a:: die Oberflächenschicht mit Trägerschicht aus Fig. 2, gelagert auf einer gedrehten Matrize, nach einem Einbringen einer Einlage in die geprägten Hohlräume,
- Fig. 3b:: einen Schnitt durch die Einzelheit III aus Fig. 3a, jedoch ohne Matrize,
- Fig. 4:: einen Schnitt durch einen Polsterbezug mit zusätzlicher Schaumlage und Gewebeschicht,
- Fig. 5:: einen Fahrzeugsitz mit einem erfindungsgemäßen Polsterbezug,
- Fig. 6a:: ein Werkzeug zur Herstellung eines erfindungsgemäßen Polsterbezugs in einem geöffneten Zustand,
- Fig. 6b:: ein Werkzeug zur Herstellung eines erfindungsgemäßen Polsterbezugs in einem geschlossenen Zustand,
- Fig. 7a:: eine Draufsicht auf eine Prägung in einem Polsterbezug gemäß eines zweiten Ausführungsbeispiels,
- Fig. 7b:: eine perspektivische Ansicht auf die Prägung in dem Polsterbezug aus Fig. 7a,
- Fig. 8a:: eine Draufsicht auf eine Prägung in einem Polsterbezug gemäß eines dritten Ausführungsbeispiels,
- Fig. 8b:: eine perspektivische Ansicht auf die Prägung in dem Polsterbezug aus Fig. 8a, und
- Fig. 9:: einen Schnitt durch eine Prägung des Polsterteils aus Fig. 8a.

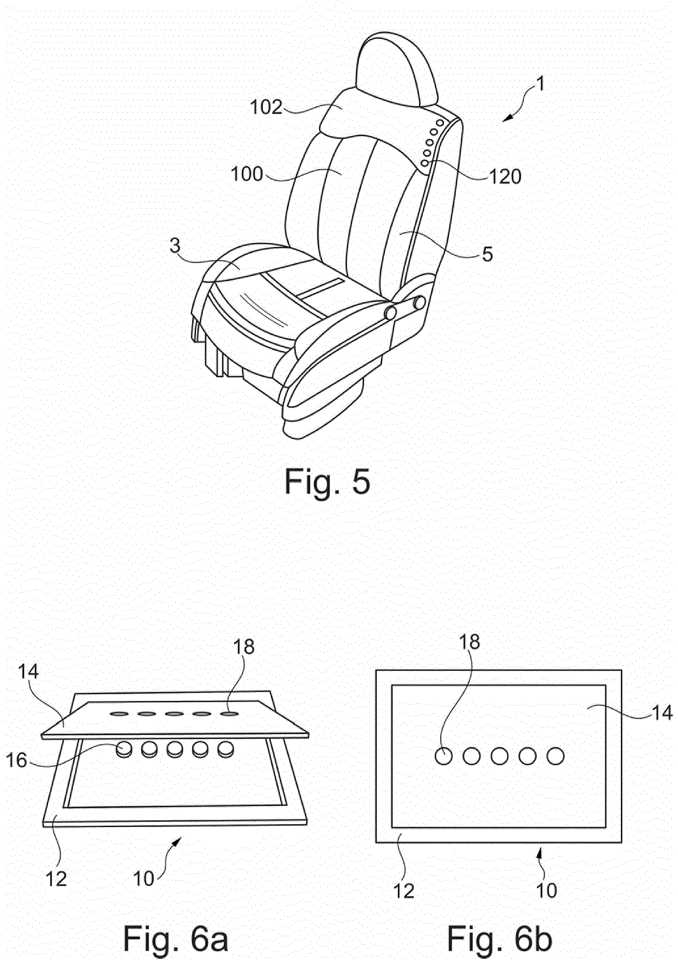

Ein in Fig. 5 dargestellter Fahrzeugsitz 1 umfasst ein Sitzteil 3 und eine an diesem befestigte Lehne 5. Die Lehne 5 weist eine lasttragende Lehnenstruktur und ein die Lehnenstruktur abdeckendes Polster auf. Ein Schaumteil des Polsters ist mit einem Polsterbezug 100 versehen oder einteilig mit diesem ausgebildet.

Der Polsterbezug 100 weist lokal mehrere Prägungen 120 auf, beispielsweise ein Emblem oder ein Markenlogo.

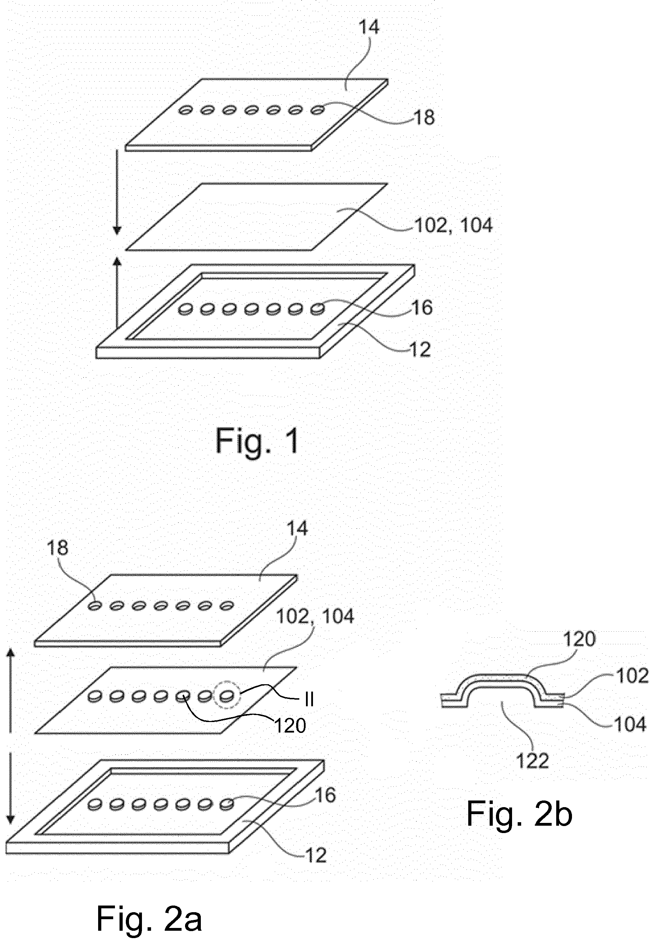

In den Figuren 1 bis 4 ist die Herstellung des Polsterbezugs 100 dargestellt. In einem in Fig. 1 dargestellten ersten Verfahrensschritt wird eine mit einer Trägerschicht 104 versehene Oberflächenschicht 102 des Polsterbezugs 100 zwischen einer mehrere Vertiefungen 18 aufweisenden Matrize 14 und einer mehrerer Erhebungen 16 aufweisenden Patrize 12 eines Werkzeugs 10 angeordnet. Die Erhebungen 16 sind komplementär zu den Vertiefungen 18. Die Vertiefungen 18 sind im Ausführungsbeispiel als Durchgangslöcher ausgeführt, so dass während des Prägens eine direkte lokale Behandlung der Oberflächenschicht 102, z.B. durch Erwärmen, Bestrahlen, Besprühen, Tränken oder dergleichen möglich ist. Die Dicke der Matrize 14 entspricht im Ausführungsbeispiel näherungsweise der Höhe der Erhebungen 16 der Patrize 12.

Anschließend werden die Matrize 14 und die Patrize 12 aufeinander zu bewegt. Dabei verformen die Erhebungen 16 der Patrize 12 die Oberflächenschicht 102 und die Trägerschicht 104, indem Material der Oberflächenschicht 102 und der Trägerschicht 104 mittels der Erhebungen 16 in die Vertiefungen 18 der Matrize 14 gedrückt werden. Das Werkzeug 10 bleibt über eine definierte Zeit in einem geschlossenen Zustand. Vorzugsweise werden die Oberflächenschicht 102 und die Trägerschicht 104 im Werkzeug 10 erwärmt, so dass die Umformung unter einer gegenüber Raumtemperatut erhöhten Temperatur erfolgt. Die Oberflächenschicht 102 kann in einer Abwandlung des Ausführungsbeispiels zusätzlich unter Einwirkung von Hochfrequenz, beispielsweise Ultraschall, mit der Trägerschicht 104 verschweißt werden.

In einem weiteren, in Fig. 2a dargestellten Verfahrensschritt wird die mit der Trägerschicht 104 versehene Oberflächenschicht 102 aus dem Werkzeug 10 entnommen. Die Oberflächenschicht 102 und die Trägerschicht 104 weisen nun mehrere, in Fig. 2a insgesamt sieben, Prägungen 120 auf, die lokal und gegenüber benachbarten Bereichen der Oberflächenschicht 102 aus der Oberflächenschicht 102 herausragen. Auf der Rückseite der Prägungen 120 befinden sich entsprechende Hohlräume 122.

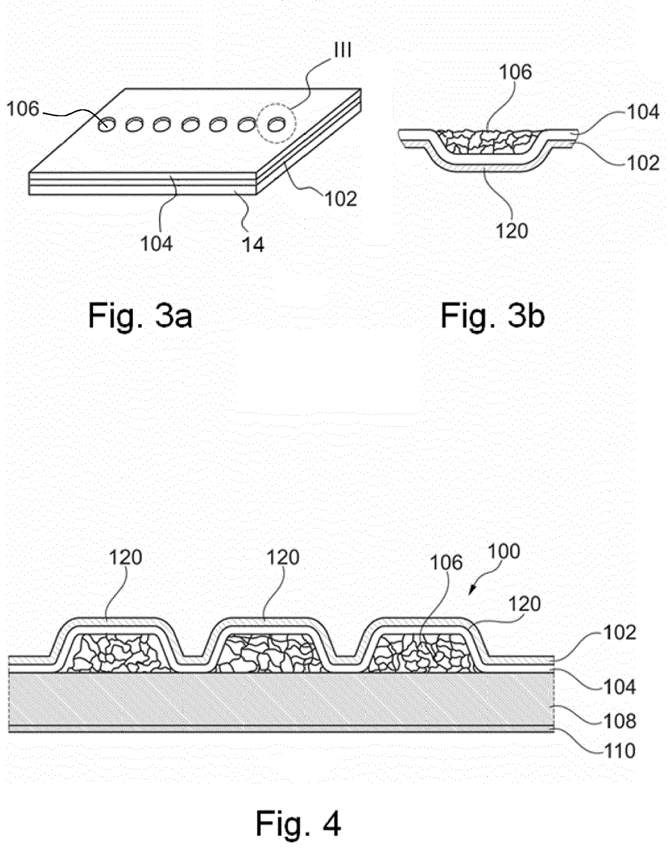

In einem weiteren in Fig. 3a dargestellten Verfahrensschritt werden die Hohlräume 122 mit aus einem Schaummaterial bestehenden Einlagen 106 gefüllt. Dies kann außerhalb des Werkzeugs 10 erfolgen, oder die Matrize 14 des Werkzeugs 10 wird gedreht und die mit der Trägerschicht 104 versehene Oberflächenschicht 102 wird in die Matrize 14 eingelegt. Die Hohlräume 122 der mit der Trägerschicht 104 versehenen Oberflächenschicht 102 weisen nach oben. Anschließend werden die Hohlräume 122 ausgeschäumt.

Figur 4 zeigt einen Schnitt durch einen Polsterbezug 100, der in weiteren Verfahrensschritten zusätzlich mit einer Schaumlage 108 und einer Gewebeschicht 110 versehen ist. Die Schaumlage 108 und/oder die Gewebeschicht 110 können in Abwandlungen des Ausführungsbeispiels entfallen.

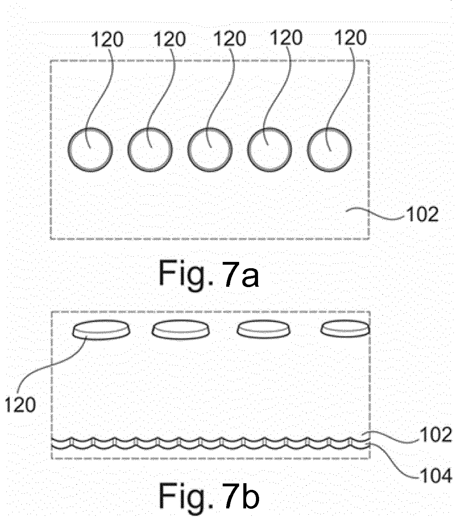

Die Figuren 7a bis 10 zeigen Ausführungsbeispiele mit unterschiedlich ausgeformten Prägungen 120. Die Prägungen 120 können jedoch auch von den Ausführungsbeispielen abweichende Formen aufweisen.

Die Figuren 7a und 7b zeigen eine lineare Anordnung von mehreren kreiszylindrischen, topfförmigen Prägungen 120.

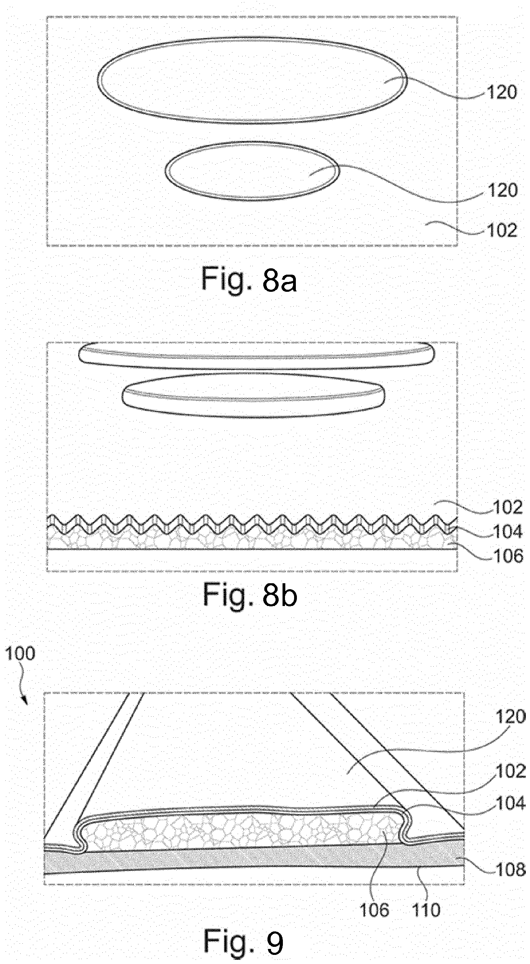

Die Figuren 8a und 8b zeigen eine Anordnung von mehreren elliptischen, topfförmigen Prägungen 120. Figur 9 zeigt einen Schnitt entlang einer großen Halbachse einer der elliptischen Prägungen 120.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 3: Sitzteil
- 5: Lehne
- 10: Werkzeug
- 12: Patrize
- 14: Matrize
- 16: Erhebung
- 18: Vertiefung
- 100: Polsterbezug
- 102: Oberflächenschicht
- 104: Trägerschicht
- 106: Einlage
- 108: Schaumlage
- 110: Gewebeschicht
- 120: Prägung
- 122: Hohlraum

## Patentansprüche

1. Polsterbezug (100) für einen Fahrzeugsitz (1), mit einer Oberflächenschicht (102) und wenigstens einer Prägung (120) in der Oberflächenschicht (102),
**dadurch gekennzeichnet, dass**
ein Hohlraum (122) auf der Rückseite der wenigstens einen Prägung (120) vollständig mit einer Einlage (106) gefüllt ist.

2. Polsterbezug (100) nach Anspruch 1, **dadurch gekennzeichnet, dass** unterhalb der Oberflächenschicht (102) eine Trägerschicht (104) angeordnet ist.

3. Polsterbezug (100) nach Anspruch 2, **dadurch gekennzeichnet, dass** die wenigstens eine Prägung in der Oberflächenschicht (102) und der Trägerschicht (104) ausgebildet ist.

4. Polsterbezug (100) nach Anspruch 2 oder 3, **dadurch gekennzeichnet, dass** die Einlage (106) an die Trägerschicht (104) angrenzt.

5. Polsterbezug (100) nach Anspruch 4, **dadurch gekennzeichnet, dass** die Einlage (106) auf einer von der Oberflächenschicht (102) abgewandten Seite der Trägerschicht (104) an die Trägerschicht (104) angrenzt.

6. Polsterbezug (100) nach einem der Ansprüche 1 bis 5, **dadurch gekennzeichnet, dass** auf der von der Oberflächenschicht (102) abgewandten Seite des Polsterbezugs (100) eine Schaumlage (108) angeordnet ist.

7. Polsterbezug (100) nach einem der Ansprüche 1 bis 6, **dadurch gekennzeichnet, dass** auf der von der Oberflächenschicht (102) abgewandten Seite des Polsterbezugs (100) eine Gewebeschicht (110) angeordnet ist

8. Polsterbezug (100) nach Anspruch 7, **dadurch gekennzeichnet, dass** die Gewebeschicht (110) als eine unterste Lage des Polsterbezugs (100) angeordnet ist.

9. Polsterbezug (100) nach einem der Ansprüche 1 bis 8, **dadurch gekennzeichnet, dass** der Polsterbezug (100) nur abschnittsweise eine Prägung (120) oder mehrere Prägungen (120) aufweist.

10. Polsterbezug (100) nach Anspruch 9, **dadurch gekennzeichnet, dass** ein Flächenanteil von wenigstens 50 % der Oberflächenschicht (102) ohne Prägung (120) ist.

11. Polsterbezug (100) nach einem der Ansprüche 1 bis 10, **dadurch gekennzeichnet, dass** eine zusammenhängende Fläche der Oberflächenschicht (102) mit einem Flächenanteil von wenigstens 50 % der Oberflächenschicht (102) ohne Prägung (120) ist.

12. Verfahren zur Herstellung eines Polsterbezugs (100) für einen Fahrzeugsitz (1), mit einer Oberflächenschicht (102) und wenigstens einer Prägung (120),
**dadurch gekennzeichnet, dass**
die Oberflächenschicht (102) in einem Werkzeug (10) mit der wenigstens einen Prägung (120) versehen wird, und eine Rückseite der wenigstens einen Prägung (120) in einem weiteren Verfahrensschritt vollständig mit einer Einlage (106) gefüllt wird.

13. Verfahren zur Herstellung eines Polsterbezugs (100) nach Anspruch 12, wobei die Oberflächenschicht (102) mit einer Trägerschicht (104) verbunden ist, **dadurch gekennzeichnet, dass** die Oberflächenschicht (102) und die Trägerschicht (104) in dem Werkzeug (10) mit der wenigstens einen Prägung (120) versehen werden.

14. Verfahren nach Anspruch 12 oder 13, **dadurch gekennzeichnet, dass** in einem weiteren Verfahrensschritt eine Schaumlage (108) auf die von der Oberflächenschicht (102) abgewandte Seite des Polsterbezugs (100) aufgebracht wird.

15. Verfahren nach einem der Ansprüche 12 bis 14, **dadurch gekennzeichnet, dass** in einem weiteren Verfahrensschritt eine Gewebeschicht (110) auf die von der Oberflächenschicht (102) abgewandte Seite des Polsterbezugs (100) aufgebracht wird.

## Claims

1. Cushion cover (100) for a vehicle seat (1), having a surface layer (102) and at least one embossing (120) in the surface layer (102), **characterized in that** a cavity (122) on the reverse side of the at least one embossing (120) is completely filled with an insert (106).

2. Cushion cover (100) according to Claim 1, **characterized in that** a carrier layer (104) is disposed below the surface layer (102).

3. Cushion cover (100) according to Claim 2, **characterized in that** the at least one embossing is configured in the surface layer (102) and the carrier layer (104).

4. Cushion cover (100) according to Claim 2 or 3, **characterized in that** the insert (106) is adjacent to the carrier layer (104).

5. Cushion cover (100) according to Claim 4, **characterized in that** the insert (106) is adjacent to the carrier layer (104) on a side of the carrier layer (104) that faces away from the surface layer (102) .

6. Cushion cover (100) according to one of Claims 1 to 5, **characterized in that** a foam tier (108) is disposed on that side of the cushion cover (100) that faces away from the surface layer (102).

7. Cushion cover (100) according to one of Claims 1 to 6, **characterized in that** a woven fabric layer (110) is disposed on that side of the cushion cover (100) that faces away from the surface layer (102).

8. Cushion cover (100) according to Claim 7, **characterized in that** the woven fabric layer (110) is disposed as a lowermost tier of the cushion cover (100).

9. Cushion cover (100) according to one of Claims 1 to 8, **characterized in that** the cushion cover (100) only in portions has one embossing (120) or a plurality of embossings (120).

10. Cushion cover (100) according to Claim 9, **characterized in that** an area percentage of at least 50% of the surface layer (102) is without embossing (120).

11. Cushion cover (100) according to one of Claims 1 to 10, **characterized in that** a contiguous area of the surface layer (102) having an area percentage of at least 50% of the surface layer (102) is without embossing (120).

12. Method for producing a cushion cover (100) for a vehicle seat (1), having a surface layer (102) and at least one embossing (120), **characterized in that** the surface layer (102) is provided with the at least one embossing (120) in a tool (10), and in a further method step a reverse side of the at least one embossing (120) is completely filled with an insert (106).

13. Method for producing a cushion cover (100) according to Claim 12, wherein the surface layer (102) is connected to a carrier layer (104), **characterized in that** the surface layer (102) and the carrier layer (104) are provided with the at least one embossing (120) in the tool (10).

14. Method according to Claim 12 or 13, **characterized in that** in a further method step a foam tier (108) is applied to that side of the cushion cover (100) that faces away from the surface layer (102).

15. Method according to one of Claims 12 to 14, **characterized in that** in a further method step a woven fabric layer (110) is applied to that side of the cushion cover (100) that faces away from the surface layer (102).

## Revendications

1. Revêtement de rembourrage (100) pour un siège de véhicule (1), comprenant une couche de surface (102) et au moins un gaufrage (120) dans la couche de surface (102),
**caractérisé en ce**
**qu'**une cavité (122) du côté arrière de l'au moins un gaufrage (120) est complètement remplie avec un insert (106).

2. Revêtement de rembourrage (100) selon la revendication 1, **caractérisé en ce qu'**une couche de support (104) est disposée en dessous de la couche de surface (102).

3. Revêtement de rembourrage (100) selon la revendication 2, **caractérisé en ce que** l'au moins un gaufrage est réalisé dans la couche de surface (102) et la couche de support (104).

4. Revêtement de rembourrage (100) selon la revendication 2 ou 3, **caractérisé en ce que** l'insert (106) est adjacent à la couche de support (104).

5. Revêtement de rembourrage (100) selon la revendication 4, **caractérisé en ce que** l'insert (106) est adjacent à la couche de support (104) sur un côté de la couche de support (104) opposé à la couche de surface (102).

6. Revêtement de rembourrage (100) selon l'une quelconque des revendications 1 à 5, **caractérisé en ce qu'**une couche de mousse (108) est disposée sur le côté du revêtement de rembourrage (100) opposé à la couche de surface (102).

7. Revêtement de rembourrage (100) selon l'une quelconque des revendications 1 à 6, **caractérisé en ce qu'**une couche de tissu (110) est disposée sur le côté du revêtement de rembourrage (100) opposé à la couche de surface (102).

8. Revêtement de rembourrage (100) selon la revendication 7, **caractérisé en ce que** la couche de tissu (110) est disposée sous forme de couche inférieure du revêtement de rembourrage (100).

9. Revêtement de rembourrage (100) selon l'une quelconque des revendications 1 à 8, **caractérisé en ce que** le revêtement de rembourrage (100) présente seulement par parties un gaufrage (120) ou plusieurs gaufrages (120).

10. Revêtement de rembourrage (100) selon la revendication 9, **caractérisé en ce qu'**une proportion de surface d'au moins 50 % de la couche de surface (102) ne présente pas de gaufrage (120).

11. Revêtement de rembourrage (100) selon l'une quelconque des revendications 1 à 10, **caractérisé en ce qu'**une surface continue de la couche de surface (102) avec une proportion de surface d'au moins 50 % de la couche de surface (102) ne présente pas de gaufrage (120).

12. Procédé de fabrication d'un revêtement de rembourrage (100) pour un siège de véhicule (1), comprenant une couche de surface (102) et au moins un gaufrage (120),
**caractérisé en ce que**
la couche de surface (102) est pourvue, dans un outil (10), de l'au moins un gaufrage (120), et un côté arrière de l'au moins un gaufrage (120), dans une étape de procédé supplémentaire, est complètement rempli avec un insert (106).

13. Procédé de fabrication d'un revêtement de rembourrage (100) selon la revendication 12, dans lequel la couche de surface (102) est connectée à une couche de support (104), **caractérisé en ce que** la couche de surface (102) et la couche de support (104) sont pourvues dans l'outil (10) de l'au moins un gaufrage (120).

14. Procédé selon la revendication 12 ou 13, **caractérisé en ce que** dans une étape de procédé supplémentaire, une couche de mousse (108) est appliquée sur le côté du revêtement de rembourrage (100) opposé à la couche de surface (102).

15. Procédé selon l'une quelconque des revendications 12 à 14, **caractérisé en ce que** dans une étape de procédé supplémentaire, une couche de tissu (110) est appliquée sur le côté du revêtement de rembourrage (100) opposé à la couche de surface (102).
